(19) Europäisches Patentamt
European Patent Office
Office européen des brevets

(11) **EP 0 923 412 B1**

(12) **FASCICULE DE BREVET EUROPEEN**

(45) Date de publication et mention
de la délivrance du brevet:
**24.01.2007 Bulletin 2007/04**

(51) Int Cl.:
***B01J 20/02*** *(2006.01)*    ***B01J 39/16*** *(2006.01)*
***G21F 9/12*** *(2006.01)*

(21) Numéro de dépôt: **98936478.1**

(22) Date de dépôt: **08.07.1998**

(86) Numéro de dépôt international:
**PCT/FR1998/001471**

(87) Numéro de publication internationale:
**WO 1999/002255 (21.01.1999 Gazette 1999/03)**

(54) **MATERIAU COMPOSITE A BASE D'HEXACYANOFERRATES ET DE POLYMERES, SON PROCEDE DE FABRICATION ET SON UTILISATION**

VERBUNDMATERIAL AUF BASIS VON HEXACYANOFERRATEN UND POLYMER , DESSEN HERSTELLUNGSVERFAHREN UND VERWENDUNG

COMPOSITE MATERIAL BASED ON HEXACYANOFERRATES AND POLYMER, METHOD FOR MAKING IT AND USE

(84) Etats contractants désignés:
**CH DE ES FI GB IT LI SE**

(30) Priorité: **09.07.1997 FR 9708723**

(43) Date de publication de la demande:
**23.06.1999 Bulletin 1999/25**

(73) Titulaires:
• **COMMISSARIAT A L'ENERGIE ATOMIQUE**
**75015 Paris (FR)**
• **CENTRE NATIONAL DE**
**LA RECHERCHE SCIENTIFIQUE**
**75794 Paris Cedex 16 (FR)**

(72) Inventeurs:
• **LOOS NESKOVIC, Christiane**
**F-92260 Fontenay aux Roses (FR)**
• **VIDAL-MADJAR, Claire**
**F-75013 Paris (FR)**
• **DULIEU, Jacqueline**
**F-92240 Malakoff (FR)**
• **PANTAZAKI, Anastasia**
**GR-546 43 Thessaloniki (GR)**

(74) Mandataire: **Poulin, Gérard et al**
**BREVALEX**
**3, rue du docteur Lancereaux**
**75008 Paris (FR)**

(56) Documents cités:
EP-A- 0 522 856        EP-A- 0 575 612
DE-A- 3 007 869        DE-A- 3 829 654
US-A- 5 601 722

• **GAUR S: "Determination of Cs-137 in environmental water by ion-exchange chromatography" JOURNAL OF CHROMATOGRAPHY A, vol. 1, no. 733, 10 mai 1996, page 57-71 XP004039296**

**Description**

La présente invention a trait à un matériau solide composite fixant des polluants minéraux, à base d'hexacyanoferrates et de polymère cationique déposé en couche pelliculaire sur un support.

Plus précisément, la présente invention a pour objet un matériau solide minéral poreux composite fixant des polluants minéraux formé d'un support solide mécaniquement et chimiquement stable revêtu d'une pellicule d'un polymère échangeur d'anions auquel est fixé une couche mince d'hexacyanoferrate insoluble.

La présente invention a également trait au procédé de préparation dudit matériau solide composite fixant des polluants minéraux à base d'hexacyanoferrates.

La présente invention concerne enfin un procédé de fixation d'au moins un polluant minéral issu d'un métal ou d'un isotope radioactif dudit métal contenu dans une solution, sur ledit matériau solide composite fixant des polluants minéraux.

De nombreux fixateurs minéraux ont été utilisés pour la fixation de divers polluants minéraux tels que des cations métalliques contenus dans les milieux et effluents divers issus de diverses industries et en particulier de l'industrie nucléaire.

En effet, l'industrie nucléaire utilise pour le traitement des effluents de faible ou moyenne radioactivité des techniques d'épuration avec réduction de volume consistant dans la fixation sur solide minéral des radioisotopes présents dans les solutions. Les volumes traités actuellement sont énormes et atteignent plusieurs dizaines de milliers de m$^3$/an pour la France. Les liquides traités sont également de nature variée puisqu'il s'agit aussi bien de traiter les eaux de refroidissement des centrales nucléaires que les effluents divers entrant en contact avec des radioisotopes tels que toutes les eaux de lavage, les solutions de régénération des résines etc...

Parmi les fixateurs minéraux mis en oeuvre notamment dans l'industrie nucléaire, on peut citer les produits à base d'oxydes de manganèse de type Manox® qui sont utilisés pour fixer des éléments présents en solution, sous diverses formes chimiques, lesdits éléments étant par exemple Ag, Sb, Ra, ou Pb ; l'hydroxyde de fer utilisé pour fixer par coprécipitation les transuraniens, et enfin les hexacyanoferrates (II ou III) insolubles. Les hexacyanoferrates notamment les hexacyanoferrates (II) de Cu, Ni et Co sont en effet parmi les fixateurs minéraux les plus couramment utilisés, en particulier dans l'industrie nucléaire en raison de la grande affinité qu'ils possèdent vis-à-vis du césium. Les fixateurs inorganiques de type hexacyanoferrate ont donc notamment été mis en oeuvre pour séparer, récupérer et fixer les ions métalliques et en particulier les ions de métaux alcalin radioactifs tels que le césium 137 à longue demi-vie à partir de divers effluents industriels et nucléaires, par exemple à partir des solutions fortement acides issues du retraitement des combustibles irradiés et des solutions déjà citées plus haut.

Actuellement, les hexacyanoferrates insolubles entrent ainsi dans la plupart des procédés de traitement des déchets radioactifs liquides par coprécipitation.

Les fixateurs minéraux et en particulier les hexacyanoferrates, s'ils présentent parfois des sélectivités élevées, présentent toutefois le défaut essentiel d'avoir une faible résistance intrinsèque, autrement dit une mauvaise tenue mécanique qui rend difficile, voire impossible leur conditionnement en colonne, à cause d'une diminution du volume occupé par le fixateur et d'un colmatage qui limite en outre le nombre des applications.

Ainsi, ces fixateurs lorsqu'ils sont préparés sous forme de poudre forment des grains mécaniquement instables ; de plus, sous forme massive compacte, leur faible surface spécifique conduit souvent à des cinétiques de réaction lentes ce qui limite fortement leur efficacité.

Il est en effet généralement difficile d'allier une forme compacte à une vitesse de réaction élevée.

A l'heure actuelle, les hexacyanoferrates massifs insolubles, bien que par ailleurs couramment mis en oeuvre, ne sont semble-t'il, utilisés industriellement sur colonnes qu'en Finlande, comme cela est décrit le document de R. HARJULA, J. LEHTO, J. WALLACE : « Removal of cesium from nuclear waste solutions by potassium-cobalt hexacyanoferrate (II) columns », Proc. Symp. Waste Manag., Tucson, Arizona, 1987, 3, p.93, et dans le document de J. LEHTO, R. HARJULA, S. HAUKKA, J. WALLACE : « Solidification of $^{137}$Cs into KCo hexacyanoferrate (II) ion exchanger », Joint Int. Waste Manag Conf., Kyoto, Japon, 1989.

Il s'agit d'hexacyanoferrates (II) de cobalt massifs qui sont mis en oeuvre pour traiter seulement des volumes limités de solutions à cause du colmatage.

De nombreuses publications font état de recherches afin de préparer des phases de bonne tenue mécanique à partir de composés fixateurs minéraux tels que les hexacyanoferrates.

Il a ainsi été proposé dans les documents de K. WATARI, K. IMAI & M. IZAWA, J Nucl.Sci. Technology, 1967, 4, 190-194 « Isolation of $^{137}$Cs with coppper ferrocyanide-anion exchange resin », de J. STEJSKAL, J. SOUKUP, J. DOLEZAL & V. KOURIM, J. Radioanal. Chem., 1974, 21, 371-379 « Improved inorganic ion-exchangers I. Systems with organic polymers as binding materials », et dans le brevet US-A-4 755 322, de préparer des résines organiques composites qui peuvent incorporer une forte proportion de composé minéral tel qu'un hexacyanoferrate.

La stabilité de ces matériaux composites est satisfaisante mais la présence majoritaire de composés organiques limite fortement les possibilités d'utilisation, d'autant plus que la partie minérale active garde l'essentiel de ses caractéristiques et en particulier la non réversibilité de la fixation.

En général, les procédés concernant l'amélioration des performances des fixateurs minéraux font appel à la précipitation in-situ en présence de silice.

C'est notamment le cas de la précipitation d'hexacyanoferrates, dans le document de K. TERADA, H. HAYAKAWA, K. SAWADA & T. KIBA, Talanta, 1970, 17,955-963 « Silica gel as a support for inorganic ion-exchangers for the determination of $^{137}Cs$ in natural waters », le brevet Russe SU-A-77 8780 de E.K. SPIRIN et al, et le document de C. KONECNY & R. CALETKA , J. Radioanal. Chem., 1973, 14, 255-266 « Adsorption properties of insoluble hexacyanoferrates (II) supported on silica gel ».

Ainsi, ce dernier document décrit-il la fixation sur gel de silice d'hexacyanoferrates insolubles afin d'en améliorer les propriétés mécaniques et de les conditionner en colonnes, ce qui permet un traitement en continu des effluents. Ces produits fixés sur gel de silice sont préparés notamment par imprégnation sous agitation du gel de silice par des solutions aqueuses saturées d'hexacyanoferrates (II) de potassium jusqu'à obtention d'un état de « solide humide », puis après séchage, mise en contact du solide avec des solutions comprenant un excès d'ions métalliques, puis de nouveau séchage et remise en contact avec des solutions 0,1 M des ions métalliques pour permettre la précipitation sur la silice de l'hexacyanoferrate voulu.

Tous les procédés et produits décrits ci-dessus qui font appel à la fixation du fixateur minéral tel que les hexacyanoferrates sur de la silice ont en commun un certain nombre d'inconvénients.

Tout d'abord, l'essentiel de la précipitation de l'hexacyanoferrate se produit à l'intérieur des pores de la silice et non en surface ce qui réduit grandement l'efficacité du fixateur minéral composite obtenu puisque la surface de contact entre ce fixateur minéral composite et la solution, représentée par la surface spécifique du composite est nettement inférieure à la surface spécifique du support, tel que la silice, choisi de préférence parmi les silices finement divisées et de grande surface spécifique.

Le procédé dit « de coprécipitation » s'avère difficile à mettre en oeuvre pour des quantités excédant quelques grammes car il se produit en particulier un phénomène de relargage des sels excédentaires.

D'autre part, la composition du produit final est très mal contrôlée, et ses propriétés sont peu reproductibles, la proportion d'hexacyanoferrate déposée étant très mal maîtrisée par la coprécipitation. En effet, l'adhésion du fixateur minéral sur la silice s'effectue par un phénomène purement mécanique ce qui entraîne que le fixateur minéral est faiblement lié au support et peut en être facilement détaché, lessivé.

En outre, les quantités de fixateur minéral tel que l'hexacyanoferrate sont relativement élevées et peuvent atteindre par exemple jusqu'à 30 % en masse par rapport à la masse de support minéral tel que la silice.

Ces quantités très excessives d'hexacyanoferrates mises en oeuvre induisent d'importantes difficultés lors du traitement et du stockage des déchets, car d'une part les boues d'hexacyanoferrates libèrent de l'hydrogène lors du stockage, comme cela est mentionné dans le document de J.L COX et al, Proc. 1st HANFORD Separation Science Workshop 23-25 July 1991, PNL-SA-21775, d'autre part ces composés ne peuvent être vitrifiés car il se produit un dégagement d'acide cyanhydrique hautement toxique lors des opérations mises en jeu lors de la vitrification.

L'utilisation de supports autre que la silice a également été proposée, notamment dans le document de R. CALETKA, H. MUNSTER & V.KRIVAN, Frezenius Z. Anal. Chim., 1987, 327, 19-20 « Preconcentration of radiocesium from water samples on zinc hexacyanoferrate bounded in agar agar gel » et le document de V.N ZAITSEV, I. KADENKO, V.V. STRELKO & E.V. SKOPENKO, Anal. Chim. Acta, 1992,256, 323-329 « Immobilization of large low-charge anions for the preparation of selective caesium absorbents » et d'autres documents.

Ainsi, le document DE-A-3 829 654 décrit la formation d'un précipité d'hexacyanoferrate mixte d'ammonium et de fer sur un support en matière plastique, pour la fixation du césium.

De même, le document DE-A-4 021 046 est-il relatif au dépôt d'un hexacyanoferrate mixte de cuivre et de potassium sur des billes poreuses en matière plastique, par exemple en une résine échangeuse d'anions fortement basique à base de polystyrène. L'échangeur composite obtenu est utilisé pour la fixation du césium.

Le document US-A-5 601 722 décrit un procédé de préparation d'un échangeur d'ions pour la séparation d'ions césium, dans lequel on contacte une résine poreuse échangeuse d'anions avec une solution d'ions hexacyanoferrates (II), puis on transforme les ions hexacyanoferrate en leur sel de cuivre insoluble dans les pores de la résine, puis on contacte la résine avec un agent oxydant et finalement on contacte la résine avec un agent réducteur en présence de cations monovalents et avec une solution aqueuse contenant des ions cuivre.

Le document JP-A- 78 026779 décrit la fixation d'hexacyanoferrate (II) dans un gel pour séparer les ions des métaux lourds se trouvant dans un liquide.

Le document GB-A-1 115 258 décrit une colonne d'hexacyanoferrate (II) mixte adsorbé sur une résine échangeuse d'ion ou incorporé dans un lit de fibre de verre, pour la séparation du césium par précipitation.

Le document DE-A-3 045 921 concerne un matériau pour la fixation du césium dans lequel un hexacyanoferrate insoluble est adsorbé dans les pores d'une zéolithe.

Tous les supports mentionnés ci-dessus présentent les mêmes inconvénients que la silice, c'est-à-dire, entre autres, l'absence de contrôle de la précipitation, les quantités minérales fortes et les propriétés variables d'une préparation à l'autre.

Il apparaît qu'il existe donc un besoin non satisfait pour un matériau solide fixant des polluants minéraux tels que des cations, à base notamment d'hexacyanoferrates de métal, qui soit chimiquement et mécaniquement stable et qui puisse ainsi être conditionné en colonne permettant une mise en oeuvre en continu.

Le matériau solide composite fixant des polluants minéraux doit également avoir d'excellentes propriétés de fixation, en particulier de décontamination, c'est-à-dire analogues, voire supérieures à celles des hexacyanoferrates non imprégnés sur un support, ce qui n'est pas le cas dans l'art antérieur où l'amélioration de la tenue mécanique obtenue avec un support se fait souvent au détriment des propriétés de fixation, en particulier de décontamination.

Il serait d'autre part souhaitable de disposer d'un matériau solide fixant des polluants minéraux associant une bonne stabilité mécanique à une vitesse de réaction élevée à l'opposé des produits sous forme compacte dont la faible surface spécifique conduit à des vitesses de réaction lentes.

Autrement dit, il existe un besoin pour un matériau solide fixant des polluants minéraux, à base d'hexacyanoferrates de métal qui présente entre autres des stabilités mécaniques et chimiques excellentes, un forte coefficient d'affinité ou de décontamination, une grande réactivité, ainsi qu'une bonne sélectivité.

Ces propriétés doivent être obtenues avec une quantité minimale de fixateur minéral de type hexacyanoferrates de métal, en tout cas une quantité nettement inférieure à celle des fixateurs minéraux composites de l'art antérieur.

De plus, en particulier dans le cas de la fixation d'éléments radioactifs, il faut que le matériau solide composite fixant des polluants minéraux puisse être aisément stocké et/ou vitrifié sans risque par les procédés connus.

Enfin, il existe un besoin pour un matériau présentant une composition et des propriétés parfaitement reproductibles et contrôlées, et pour un procédé fiable permettant de préparer un tel matériau.

La présente invention a donc pour but de fournir un matériau solide composite fixant des polluants minéraux à base d'hexacyanoferrates de métal, qui ne présente pas les inconvénients et limitations des matériaux solides en particulier des matériaux solides composites fixant des polluants minéraux de l'art antérieur, qui surmonte les problèmes des matériaux de l'art antérieur et qui remplisse, entre autres, l'ensemble des besoins mentionnés plus haut.

Ce but, et d'autres encore, sont atteints, conformément à l'invention, par un matériau solide composite fixant des polluants minéraux, à base d'hexacyanoferrate de métal, caractérisé en ce qu'il comprend un support solide minéral poreux revêtu d'une pellicule d'un polymère échangeur d'anions auquel est fixé un hexacyanoferrate de métal insoluble formant une couche mince.

Le matériau selon l'invention présente une structure spécifique dans laquelle le fixateur minéral en tant que tel, c'est-à-dire l'hexacyanoferrate de métal, se présente sous la forme d'une couche mince qui est immobilisée sur une phase polymérique fixée sur un support, ledit support étant solide et avantageusement, chimiquement et mécaniquement stable, et étant protégé et isolé de l'action du milieu par la couche sous-jacente de polymère.

De ce fait, le matériau selon l'invention est également chimiquement et mécaniquement stable et associe ces stabilités à une vitesse de réaction élevée, et est parfaitement adapté à un conditionnement en colonne.

A titre d'exemple, la stabilité mécanique du matériau selon l'invention s'est révélée parfaite sur colonne, après lavage à l'eau pure pendant plusieurs jours, correspondant à plus de 10 000 volumes de colonne.

Dans le matériau selon l'invention, l'anion hexacyanoferrate est adsorbé sur le polymère, par des interactions de type électrostatique, et de ce fait adhère fortement au support.

La liaison qui existe entre la partie anionique de l'hexacyanoferrate de métal, et le support revêtu du polymère échangeur d'anions, est une liaison de type électrostatique, qui n'est pas une liaison faible de nature mécanique mettant essentiellement en jeu des phénomènes d'adsorption dans les pores comme c'est le cas dans les hexacyanoferrates imprégnés, par exemple sur un gel de silice, de l'art antérieur.

Le dépôt de l'hexacyanoferrate est effectué uniformément sur toute la surface modifiée du support.

Tous les sites d'échanges possibles du polymère échangeur d'anions sont échangés, la composition et les propriétés du matériau selon l'invention sont donc parfaitement contrôlées et reproductibles au contraire des matériaux de l'art antérieur. Il n'existe plus à la surface du matériau d'hexacyanoferrate résiduel, en excès, susceptible d'être relargué et perturbant par la suite le processus de fixation.

Le matériau selon l'invention présente d'autre part une surface de contact qui est du même ordre de grandeur que la surface spécifique du support choisi. En conséquence, la réactivité de l'hexacyanoferrate est augmentée.

Le coefficent de distribution du matériau selon l'invention qui est de préférence de 10000 à 100000 pour un gramme de matériau est élevée et est comparable à celle des hexacyanoferrates massifs mais les quantités d'hexacyanoferrates mises en oeuvre, sont de manière avantageuse très inférieures à celles des hexacyanoferrates imprégnés sur silice de l'art antérieur.

Ainsi le matériau selon l'invention comprend généralement une quantité d'hexacyanoferrate de métal fixé de 1 à 10 % en poids, de préférence de 2 à 3% en poids par rapport à la masse du support, cette valeur est à rapprocher de la valeur de 30% donnée plus haut.

On limite la quantité de ferrocyanure qui est fixée et rejetée à l'issue de son utilisation, et on obtient la même efficacité pour une quantité par exemple dix fois moindre d'hexacyanoferrate, car tout le produit fixé est efficace.

C'est en particulier la raison pour laquelle, il est possible de stocker facilement le matériau selon l'invention, qui est stable et essentiellement minéral, et/ou de le vitrifier ce qui était jusqu'à présent impossible avec lès matériaux de l'art antérieur.

De manière plus précise, le support solide peut être choisi parmi les supports connus de l'homme du métier et convenant à l'usage décrit ; ces supports solides sont minéraux et sont choisis généralement parmi les supports solides chimiquement et mécaniquement stables.

Le support sera ainsi choisi de préférence parmi les oxydes minéraux tels que la silice, l'alumine, l'oxyde de titane, l'oxyde de zirconium, la terre de diatomées, les verres, et les zéolithes; un support préféré est la silice, aisément disponible à un coût raisonnable.

Le support peut se présenter sous une forme quelconque par exemple sous forme de particules telles que grains, billes, sphères, sous forme de fibres, ou autres ou encore sous forme de membrane, de tube creux, d'étoffe tissée ou non tissée etc...

La granulométrie du support, sous forme de particules, définie par la taille des particules, c'est-à-dire le diamètre dans le cas de particules sphériques, peut varier dans de larges limites et sera généralement de 1 à 500 $\mu$m, de préférence supérieure ou égale à 10 $\mu$m, de préférence encore supérieure.ou égale à 30 $\mu$m, par exemple dans les essais en colonnes.

La surface spécifique du support peut également être variable, par exemple de 10 à 500 m$^2$/g, de préférence 30 à 500 m$^2$/g.

Le support est un support poreux pour permettre une meilleure fixation du polymère.

La taille moyenne des pores du support est variable, et est de préférence de 100 à 1000 Å.

Le polymère échangeur d'anions du matériau solide composite fixant des polluants minéraux selon l'invention est issu d'un polymère organique qui a été éventuellement pourvu de groupements cationiques par tout procédé connu de l'homme du métier.

Ce polymère organique est choisi de préférence parmi les polyvinylimidazoles, les copolymères du vinylimidazole avec au moins un autre monomère par exemple un monomère vinylique, les polyéthyléneimines, les polyamines et tout polymère porteur d'un groupement cationique ou analogue ou susceptible d'en être pourvu.

Des exemples de ces polymères sont donnés par exemple dans le document EP-A-0 225 829 et le document DE-A-30 07 869.

Tout polymère convient à la condition qu'il forme une pellicule, ou film très adhérent à la surface du support, par exemple par adsorption dans les pores ou par liaison covalente à l'aide d'un greffage adapté, et qu'il soit ou qu'il puisse être, porteur de groupements cationiques.

Par ailleurs, et pour une meilleure tenue du polymère adsorbé sur le support, il est généralement préférable de procéder à une réticulation du polymère.

Pour le polymère greffé, une réticulation n'est généralement pas nécessaire.

L'hexacyanoferrate de métal qui est fixé au polymère échangeur d'anions peut être tout hexacyanoferrate connu de l'homme du métier, il peut être choisi par exemple parmi les hexacyanoferrates de cuivre, cobalt, zinc, cadmium, nickel, fer, et les hexacyanoferrates mixtes se rapportant à ces sels.

L'invention a également trait à un procédé de préparation du matériau solide composite fixant des polluants minéraux, à base d'hexacyanoferrates, décrit plus haut, ce procédé étant caractérisé en ce qu'il comprend les étapes suivantes:

- Imprégnation d'un support solide minéral poreux avec une solution d'un polymère organique, pour former une pellicule dudit polymère organique sur ledit support solide ;
- Réticulation éventuelle dudit polymère (en particulier adsorbé) avec un agent de réticulation;
- Création éventuelle de groupements cationiques sur ledit polymère organique réticulé ;
- Imprégnation du support solide ainsi revêtu d'une pellicule de polymère échangeur d'anions, par une solution d'hexacyanoferrate de métal alcalin;
- Lavage et éventuellement séchage dudit support solide revêtu d'une pellicule de polymère échangeur d'anions auquel est fixé un hexacyanoferrate de métal alcalin;
- Addition d'une solution aqueuse d'un sel métallique au dit support solide revêtu, pour former un matériau solide composite fixant des polluants minéraux, comprenant le support solide revêtu d'une pellicule de polymère échangeur d'anions auquel est fixé un hexacyanoferrate de métal insoluble formant une couche mince.
- Lavage et séchage.

Ce procédé est simple, fait appel à des processus connus et éprouvés, est fiable et parfaitement reproductible, c'est-à-dire qu'il permet le préparation d'un produit final dont les caractéristiques, la composition et les propriétés sont parfaitement déterminées, et ne subissent pas de variation aléatoires.

Le procédé de préparation selon l'invention se distingue ainsi totalement des procédés de l'art antérieur notamment ceux faisant appel à une simple précipitation sur un support.

L'invention concerne enfin un procédé de fixation d'au moins un polluant minéral tel qu'un cation métallique contenu dans une solution, par mise en contact de ladite solution avec le matériau solide composite fixant des polluants minéraux, décrit plus haut.

L'invention va maintenant être décrite plus en détail dans ce qui suit en faisant en particulier référence au procédé de préparation.

La première étape de ce procédé consiste en l'imprégnation d'un support solide avec une solution de polymère organique sur ledit support solide.

Le support solide est l'un de ceux qui ont déjà été mentionné plus haut, un support préféré étant la silice Lichrosphere® 100 de la société Merck®, le polymère est également l'un de ceux qui ont été cités ci-dessus.

La solution de polymère est une solution dans un solvant quelconque, choisi par exemple parmi l'eau et les alcools tel que l'éthanol, le méthanol et leurs mélanges.

La solution est de préférence une solution concentrée, c'est-à-dire que la concentration du polymère dans le solvant est généralement de 40 g/l.

L'imprégnation est réalisée par mise en contact du support solide avec la solution de polymère pendant une durée suffisante par exemple de 24 à 48 heures, moyennant quoi on obtient un revêtement uniforme de polymère sur le solide qui isole et protège le support solide, qui en épouse les formes et les porosités et qui en conserve la surface spécifique.

La fixation du polymère sur le support solide est essentiellement régie par un phénomène d'adsorption sur plusieurs points d'ancrage, mais un greffage par l'intermédiaire de liaison(s) covalente(s) peut être envisagé..

- Dans une deuxième étape, ledit polymère, lorsqu'il est adsorbé, est éventuellement réticulé avec un agent de réticulation afin de stabiliser la couche de polymère adsorbé sur la surface.

Cet agent de réticulation dépend du polymère mis en oeuvre et peut être facilement déterminé par l'homme du métier, cet agent est choisi par exemple parmi les réactifs bifonctionnels susceptibles de réagir avec le polymère tels que l'épichlorhydrine, l'éther diglycidylique du 1,4-butane diol (BUDGE), les bis époxydes...

Un agent de réticulation préféré pour les polymères de type polyvinylimidazole (PVI) ou polyéthyléneimine (PEI) est l'éther diglycidylique du 1,4-butane diol (BUDGE) commercialisé par exemple par la société ALDRICH. Dans le cas des polyéthyléneimines, une technique de réticulation est décrite dans le document DE-A-3 007 869.

L'opération de réticulation est généralement réalisée en 24 heures.

L'étape suivante consiste à créer des groupements cationiques sur ledit polymère organique éventuellement réticulé. Il est toutefois possible que le polymère organique, éventuellement réticulé, comprenne déjà des groupements cationiques ou analogues, il n'est alors pas nécessaire d'avoir recours à cette étape.

Ces groupements cationiques peuvent être tout groupement cationique connu de l'homme du métier, tel qu'ammonium, phosphonium, sulfonium etc...

La création des groupements cationiques peut se faire par toute technique connu de l'homme du métier, et est fonction notamment de la structure du polymère et du groupement cationique recherché.

Ainsi, dans le cas d'un polymère comportant des atomes d'azote, tels qu'un polyvinylimidazole, on utilisera de préférence une technique de quaternisation.

Une telle technique est décrite par exemple dans le document EP-A-0 225 829 pour ce qui concerne les polyvinylimidazoles. On effectue par exemple la quaternisation de l'atome situé en position 3 du noyau imidazole de façon connue au moyen d'un agent alkylant.

On peut par exemple faire agir un hydrocarbure halogéné réactif tel que l'iodométhane, un époxyde, un polyépoxyde ou une épihalohydrine telle que l'épichlorhydrine, sur le polyvinylimidazole déposé sur le support solide en préparant une suspension du support solide imprégné dans une solution du réactif alkylant, de préférence dans un solvant polaire tel qu'un alcool, par exemple le méthanol, l'éthanol ou l'isopropanol, à température ambiante ou à chaud, et de préférence à une température voisine de 60°C ou inférieure à 50°C environ.

A l'issue de cette étape éventuelle de création de groupements cationiques sur ledit polymère, on obtient ainsi un support solide revêtu d'une pellicule de polymère échangeur d'anions.

Par pellicule, on entend comme déjà indiqué plus haut, un revêtement uniforme sur toute la surface du support solide et qui conserve sensiblement la surface spécifique de ce dernier.

Cette pellicule a généralement une épaisseur de 200 à 300 nm.

On effectue ensuite dans l'étape suivante, l'imprégnation du support revêtu d'une pellicule de polymère échangeurs d'anions avec une solution aqueuse d'hexacyanoferrate (II) ou (III) de métal alcalin.

L'hexacyanoferrate de métal alcalin de départ est choisi de préférence parmi les hexacyanoferrates (II) et (III) de sodium ou de potassium.

La solution aqueuse d'hexacyanoferrate de métal alcalin mise en oeuvre a une concentration variable, c'est-à-dire que la concentration du sel d'hexacyanoferrate (II) ou (III) de métal alcalin en particulier de potassium ou de sodium est de préférence de 1 à 100 g/l, par exemple de 50 g/l.

D'autre part, la solution aqueuse d'hexacyanoferrate mise en oeuvre est préparée de telle sorte, que le rapport massique du sel d'hexacyanoferrate (II) ou (III) de métal alcalin en particulier de potassium ou de sodium, à la quantité du support d'imprégnation essentiellement constitué du support solide initial tel que la silice, soit de préférence de 5 à 10%

L'imprégnation est réalisée de préférence à un pH défini, réglé, par exemple à un pH de 2 à 7 tel que 2, 4, ou 7. Le pH est contrôlé par exemple par un tampon adéquate tel qu'un tampon TRIS-HCl $2.10^{-2}$ M à pH 7, ou bien par un tampon acétate 20 mM à pH 4, ou encore par un tampon citrate à pH 2.

On obtient ainsi la fixation de la partie anionique $[Fe(CN)_6]^{4-}$ sur les groupements cationiques du polymère, cette fixation se fait par formation de liaisons de type électrostatique qui sont relativement forte selon le milieu, et cette fixation est généralement quantitative, c'est-à-dire que tous les sites cationiques du polymère réagissent. La fixation ne présente donc aucun caractère aléatoire.

Le support solide ainsi revêtu d'une pellicule de polymère échangeur d'anions auquel est fixé un hexacyanoferrate de métal alcalin est soumis ensuite à une opération de lavage, et éventuellement de séchage.

L'opération de lavage a pour but d'éliminer les sels d'hexacyanoferrate de métal alcalin qui n'ont pas été fixés sur le polymère et permet d'obtenir un matériau composite fixant des polluants minéraux dans lequel il n'existe plus d'hexacyanoferrate libre, non lié, pouvant être relargué.

Le lavage peut être effectué avec de l'eau déminéralisée, ou avec un tampon analogue à celui utilisé lors de l'étape précédente. La quantité de solution de rinçage utilisée est variable et peut aller de 100 à 1000 ml par gramme de produit traité.

On effectue éventuellement, suite à ce lavage/rinçage un traitement de séchage qui peut être par exemple réalisé sous vide à température ambiante.

La durée du séchage est variable et peut aller par exemple de 2 heures à 24 heures.

L'étape suivante est l'addition d'une solution aqueuse de sel métallique sur le support solide revêtu d'une pellicule d'un polymère échangeur d'anions, auquel est fixé l'anion hexacyanoferrate.

Le sel de métal contenu dans cette solution aqueuse est un sel dont le métal correspond à l'hexacyanoferrate insoluble que l'on souhaite obtenir comme cela a déjà été indiqué plus haut.

Ce métal est choisi par exemple parmi le cuivre, le cobalt, le zinc, le cadmium, le nickel et le fer etc... Le sel de métal sera donc par exemple un nitrate, un sulfaté, un chlorure, un acétate d'un de ces métaux à une concentration dans la solution aqueuse de préférence de 0,01 à 1 mol/l de préférence encore de 0,02 à 0,05 mol/l. La quantité de sel utilisée est par ailleurs de préférence environ de 0,4 mmole/g de support traité.

De préférence, l'addition de la solution aqueuse du sel de métal se fait à un pH défini, par exemple de 2 à 7 tel que 2, 4 ou 7 en utilisant de l'eau déminéralisée ou en fixant le pH à l'aide d'une solution tampon analogue à celle qui a déjà été utilisé plus haut (Tampon TRIS ou tampon Acétate ou tampon citrate), selon le polymère utilisé.

On effectue enfin dans une dernière étape le lavage du matériau final obtenu qui comprend ainsi le support solide revêtu d'une pellicule d'un polymère échangeur d'anions auquel est fixé un hexacyanoferrate de métal insoluble formant une couche mince.

Cette dernière étape de lavage est effectuée de la même manière et dans les mêmes conditions que l'étape de lavage déjà décrite plus haut. Selon le polymère utilisé, on utilise un tampon analogue à celui déjà utilisé plus haut ou de l'eau déminéralisée.

Cette opération de lavage permet d'éliminer le sel de métal en excès et d'obtenir un produit final stable à la composition parfaitement définie.

On effectue enfin une étape de séchage dans les conditions analogues à celles décrites plus haut.

De manière générale, le séchage est poursuivi jusqu'à ce que la masse du support reste sensiblement constante.

La teneur pondérale en échangeurs de cations c'est-à-dire en hexacyanoferrate de métal insoluble fixé sur le polymère échangeur d'anions est généralement de 1 à 10 % par exemple de 3% par rapport à la masse du support minéral tel que la silice. Il a été constaté par analyse par activation neutronique que le rapport atomique de $M_2$/Fe peut varier de 1 à 5 sans que les propriétés de fixation, en particulier de décontamination ne soient affectées.

Le matériau solide composite fixant des polluants minéraux selon l'invention, peut être mis en oeuvre notamment, mais non exclusivement, dans un procédé de fixation d'au moins un polluant minéral par exemple d'un cation métallique contenu dans une solution, dans lequel ladite solution est mise en contact avec ledit matériau solide composite fixant des polluants minéraux.

Les matériaux selon l'invention, du fait de leurs excellentes propriétés tels qu'une excellente capacité d'échange, une excellente sélectivité, une vitesse de réaction élevée conviennent particulièrement à un tel usage.

Cette excellente efficacité est obtenue avec des quantités réduites de fixateur minéral tel que d'hexacyanoferrate insoluble.

De plus, les excellentes propriétés de tenue et de stabilité mécaniques du matériau selon l'invention, résultant de sa structure spécifique permettent son conditionnement en colonne et la mise en oeuvre en continu du procédé de fixation, qui peut ainsi être facilement intégré dans une installation existante, par exemple dans une chaîne ou ligne de traitement comprenant plusieurs étapes.

Les solutions qui peuvent être traitées par le procédé de l'invention et avec le matériau solide composite fixant des polluants minéraux selon l'invention, sont très variées, et peuvent même contenir par exemple des agents corrosifs, acides, bases ou autres, du fait de l'excellente stabilité chimique du matériau selon l'invention.

Le matériau selon l'invention est utilisable en particulier sur une très large gamme de pH. Par exemple on pourra traiter des solutions aqueuses nitriques de concentration allant par exemple de 0,1 à 3M, des solutions acides ou neutres jusqu'à un pH 8, des solutions basiques etc... Il y a lieu toutefois d'adapter éventuellement la nature du support solide à la nature de la solution traitée. Il est par exemple connu que la silice ne résiste généralement pas à un pH basique, et qu'il est alors préférable d'utiliser un support solide par exemple en $TiO_2$, l'utilisation du matériau composite peut alors être étendue par exemple jusqu'à pH 12.

Le polluant minéral susceptible d'être fixé dans le procédé selon l'invention peut être tout polluant minéral issu d'un métal ou d'un isotope, de préférence d'un isotope radioactif, de ce métal, susceptible de se trouver en solution.

Ce polluant est choisi de préférence parmi les complexes anioniques, les colloïdes, les cations et leurs mélanges.

Il s'agit de préférence d'un polluant, tel qu'un cation issu d'un élément choisi parmi Tl, Fe, Cs, Co, Ru, Ag,... et les isotopes, en particulier les isotopes radioactifs de ceux-ci, parmi lesquels on peut citer $^{58}$Co, $^{60}$Co, [55-59]Fe, $^{134}$Cs, $^{137}$Cs, [103, 105, 105, 107]Ru. Le cation métallique est en particulier le Césium $Cs^+$ ou le Thallium $Co^{2+}$.

Le complexe anionique est par exemple $RuO_4^{2-}$ .

Une utilisation préférée du matériau selon l'invention est la fixation du césium qui contribue à une grande part de l'activité gamma des liquides de l'industrie nucléaire et qui est fixé sélectivement par les hexacyanoferrates.

La concentration du ou des polluant(s) tel que du ou des cation(s) peut varier entre de larges limites : par exemple elle peut être pour chacun de ceux-ci de 0,1 picogramme à 10 mg/l, de préférence de 0,01 mg/l à 10 $\mu$g/l.

La solution à traiter par le procédé de l'invention est de préférence une solution aqueuse, qui peut outre le ou les polluant (s) tels que un ou des cation(s) à fixer, contenir d'autres sels en solution tels que $NaNo_3$ ou $LiNO_3$ ou encore $Al(NO_3)_3$ ou tout autre sel soluble de métal alcalin ou alcalino-terreux à une concentration pouvant atteindre jusqu'à 2 moles /l. La solution peut également contenir, comme indiqué plus haut, des acides, bases, et même des composés organiques.

La solution à traiter peut également être une solution dans un solvant organique pur tel que l'éthanol (alcool absolu), l'acétone ou autre, dans un mélange de ces solvants organiques, ou dans un mélange d'eau et d'un ou plusieurs de ces solvants organiques miscibles à l'eau.

Le matériau selon l'invention présente ainsi l'avantage de pouvoir traiter des solutions qui ne peuvent être traitées avec des résines organiques.

Cette solution peut consister en un liquide de procédé ou en un effluent industriel ou autre qui peut être issu en particulier de l'industrie et des installations nucléaires ou de toute autre activité liée au nucléaire.

Parmi les liquides et effluents divers de l'industrie nucléaire, des installations nucléaires et des activités mettant en oeuvre des radionucléïdes qui peuvent être traités par le procédé de l'invention on peut citer par exemple les eaux de refroidissement des centrales, et tous les effluents divers entrant en contact avec des radioisotopes tels que toutes les eaux de lavage, les solutions de régénération de résines etc...

Il est toutefois évident que le procédé selon l'invention peut également être mis en oeuvre dans d'autres domaines d'activités, industriels ou autres, non nucléaires.

Ainsi, les hexacyanoferrates fixent sélectivement le thallium et cette propriété pourrait être mise à profit dans l'épuration des effluents de cimenterie pour réduire ou supprimer les rejets et émissions de cet élément qui est un poison violent.

On a vu que le procédé de fixation selon l'invention est de préférence mis en oeuvre en continu, le matériau échangeur de cations selon l'invention, de préférence sous forme de particules, étant alors conditionné par exemple sous forme de colonne, mais le procédé de fixation peut aussi être mis en oeuvre en discontinu, en mode « batch », la mise en contact du matériau échangeur et de la solution à traiter étant alors réalisée de préférence sous agitation. Le conditionnement en colonne permet de traiter en continu des quantités importantes de solution, avec un fort débit de celles-ci.

Le temps de contact de la solution à traiter avec le matériau échangeur est variable et peut aller de 1 minutes à 1 heure pour un fonctionnement en continu et de 10 minutes à 24 heures pour un fonctionnement en « batch ».

A l'issue du procédé de fixation le matériau solide composite fixateur (échangeur) selon l'invention dans lequel par exemple les cations de métal de l'hexacyanoferrate ont été échangés par les cations se trouvant dans la solution peut être directement stocké, car ses très grandes stabilités mécaniques et chimiques et sa nature essentiellement minérale autorisent un tel stockage sans qu'il ne se produise de dégradation du produit conduisant à des émanations d'hydrogène, ou bien il peut être traité par un procédé permettant un conditionnement pour un stockage de longue durée par exemple par vitrification.

La vitrification est particulièrement adaptée dans le cas où les cations fixés sont des radioisotopes et où le support est de la silice.

Le matériau selon l'invention, grâce à sa structure spécifique, et contrairement aux matériaux échangeurs de l'art antérieur à base d'hexacyanoferrate, peut être vitrifié sans danger car les quantités de fixateur minéral sont limitées et la décontamination à l'air sans danger.

Enfin, il serait également possible d'éluer le cation fixé, tel qu'un cation d'élément radioactif par dissolution sélective du support par exemple à l'aide d'une solution de soude concentré.

La possibilité de stocker, de traiter par exemple par vitrification, de manière sûre, fiable le matériau selon l'invention à base d'hexacyanoferrate constitue un des avantages de l'invention et apporte une solution à un des problèmes essentiels non résolus présentés par tous les échangeurs de l'art antérieur qu'ils soient notamment massifs ou composites.

Les exemples suivants, donnés à titre illustratif et non limitatif, illustrent la préparation de matériaux échangeurs composites selon l'invention et les résultats obtenus par mise en oeuvre de ces matériaux échangeurs composites dans le cadre d'un procédé de fixation de cations selon l'invention appliqué à la fixation du cobalt et du césium à partir d'effluents radioactifs.

EXEMPLE 1

Dans cet exemple, on a réalisé la synthèse d'hexacyanoferrates en couche mince, immobilisés sur des silices recouvertes d'une phase polymérique échangeuse d'anions, ladite phase étant préparée à partir de différents polymères.

EXEMPLE 1A

Dans cet exemple, le polymère échangeur d'anions est préparé à partir de polyvinylimidazole (PVI) ayant la structure et les caractéristiques suivantes : Masse molaire mesurée par viscosimétrie, $M_w=16000$.

Le mode opératoire est le suivant :

- Un support de silice Lichrosphere® 100, fourni par la société Merck®, ayant un diamètre des particules de 10 $\mu$m, et une porosité de 100 Å, est imprégné de polyvinylimidazole (PVI) par mise en contact pendant 24 h dans une solution concentrée c'est-à-dire 40 g/l de polymère dans le méthanol.
- Le support ainsi revêtu est ensuite réticulé au BUDGE et quaternisé à l'iodure de méthyle selon le procédé décrit dans le document EP-A-0 225 869 de B. Sebille et al.
- La capacité d'échange de ce support a été mesurée à pH 7 en adsorbant une solution NaCl 1M et en l'échangeant par une solution de $NaNO_3$ 0,5M
- La capacité de l'échangeur d'anions est de 0,6 meq par g de silice.
- Le support pelliculaire échangeur d'anions est imprégné par une solution concentrée d'hexacyanoferrate II de potassium (50 g/l) en présence d'un tampon TRIS-HCl $2.10^{-2}$ M à pH 7.
- Le support est ensuite lavé dans le même tampon puis séché.
- On forme un hexacyanoferrate (II) de cuivre sur la surface pelliculaire par ajout d'une solution aqueuse de nitrate de cuivre (II) $2.10^{-1}$ M dans l'eau déminéralisée.
- L'excès de cuivre est éliminé par lavage à l'eau déminéralisée.
- L'analyse élémentaire du produit final obtenu est donnée dans le tableau I ci-dessus.

EXEMPLE 1B

Dans cet exemple, le polymère échangeur est préparé à partir de polyéthyléneimine (PEI) ayant une masse moléculaire moyenne $M_w$ de 25000 fourni par la société ALDRICH (référence 40 872-7).

Le mode opératoire est le suivant :

- Un support de silice Lichrosphere® 100, fourni par la société Merck®, ayant un diamètre des particules de 60 à 200 $\mu$m et une porosité de 100 Å est imprégné de polyéthylèneimine (PEI) par une mise en contact pendant 24 h dans une solution concentrée c'est-à-dire à 40 g/l de polymère dans le méthanol.
- Le support ainsi revêtu est ensuite réticulé au BUDGE.
- La capacité d'échange de ce support a été mesurée de la même manière que dans l'exemple 1A mais en se plaçant à pH 4.
- La capacité de l'échangeur d'anions est de 0,9 meq par g de silice.

- Le support pelliculaire échangeur d'anions est imprégné par une solution concentrée d'hexacyanoferrate (II) de sodium à 50 g/l en présence d'un tampon acétate 20 mM à pH 4.
- Le support est ensuite lavé dans le même tampon puis séché.
- On forme un hexacyanoferrate (II) de cuivre sur la surface pelliculaire par ajout d'une solution de nitrate de cuivre (II) $2.10^{-1}$ M dans le même tampon.
- L'excès de cuivre est éliminé par lavage au tampon acétate.

L'analyse élémentaire du produit final obtenu qui contient en poids environ de 90% de silice est donnée dans le tableau I.

Le tableau I indique également les compositions élémentaires des produits intermédiaires obtenus lors de la préparation des produits finaux des exemples 1A et 1B.

Ces produits intermédiaires des exemples 1A et 1B désignés respectivement par Int.Ex.1A et Int.Ex.1B sont constitués respectivement par le support en silice revêtu d'un pellicule de PVI cationique auquel est fixé de l'hexacyanoferrate de potassium, et par le support en silice revêtu d'une pellicule de PEI cationique auquel est fixé de l'hexacyanoferrate de sodium, ce dernier produit contient en poids environ 90% de silice

TABLEAU I

| Composition élémentaire des matériaux selon l'invention à base d'hexacyanoferrate de cuivre et des intermédiaires pour leur préparation (les pourcentages sont des pourcentages massiques par g de silice) | | | |
|---|---|---|---|
| Produit | Cu % | Fe % | Cu : Fe (at:at) |
| Int.Ex 1A | <0,01 | 1,2 | - |
| Final Ex.1A | 1,2 | 1,2 | 0,9 |
| Int.Ex 1B | 0,02 | 1,3 | - |
| Final Ex. 1B | 4, 1 | 1, 6 | 2,3 |

EXEMPLE 2 : Essais de fixation en colonne du césium et du cobalt.

Dans cet exemple, on a étudié la fixation en colonne du césium radioactif $^{134}$Cs et $^{137}$Cs contenu dans divers effluents, sur divers produits à base d'hexacyanoferrate, à savoir :

- les matériaux échangeurs composites selon l'invention préparés dans les exemples 1A et 1B ci-dessus.
- les produits intermédiaires déjà décrits plus haut des exemples 1A et 1B.
- le produit de départ de l'exemple 1A c'est-à-dire un produit comprenant le support de silice revêtu de polymère PVI.
- à titre comparatif des hexacyanoferrates massifs de l'art antérieur et une résine composite de l'art antérieur.

Les hexacyanoferrates massifs sont :

- un hexacyanoferrate de cuivre $Cu_2Fe(CN)_6$ à 95,7 % en Cu préparé en laboratoire (« massif labo »),
- un hexacyanoferrate industriel qui est un hexacyanoferrate mixte de cobalt et de potassium de formule $Co_{2-x}K_{2x}Fe(CN)_6$ à 91 % en Co et 2% en potassium disponible auprès de la société LEHTO® (« Massif industriel 1 »),
- un hexacyanoferrate industriel qui est un hexacyanoferrate mixte de cuivre et de potassium de formule $Cu_{2-x}K_{2x}Fe(CN)_6$ (« Massif Industriel 2 ») disponible auprès de la société STMI (Société des Techniques en Milieu Ionisant).

L'hexacyanoferrate composite («composite») est un hexacyanoferrate de cuivre incorporé dans une résine phénolique, dans la proportion de 24 % de solide minéral dans le produit final. Cet hexacyanoferrate a été préparé selon le mode opératoire donné dans le document US-A-4 755 322 DE J. NARBUTT et al.

Les effluents traités sont des effluents réels issus de la pile OSIRIS du centre d'études nucléaires de SACLAY dont les caractéristiques relatives à la radioactivité sont mentionnées dans le tableau II. Il s'agit d'une part de l'eau de refroidissement de la pile qui est désigné par « OSI » dans le tableau et dont le pH est neutre, et d'autre part de la solution de rinçage des résines qui est désignée par « BF6 » dans le tableau et qui est constituée par une solution d'acide nitrique à 0,1 M. Afin d'augmenter la précision des comptages, un traceur $^{134}$Cs a été ajouté à la solution OSI.

TABLEAU II

| Radioactivité des solutions traitées en curie par m³. | | | |
|---|---|---|---|
| | $^{134}$Cs | $^{137}$Cs | $^{60}$Co |
| OSI | 1,02* | 0,36** | $4,1.10^{-2}$ |
| BF6 | 0,52 | 2,96 | 0,56 |
| * Traceur ajouté<br>** Très variable selon les solutions | | | |

Le mode opératoire des essais est le suivant :

20 mg de produit sont ajoutés à 50 cm³ de solution à traiter et agités pendant une durée de 10 minutes ou d'un jour selon les essais.

A la fin de la durée choisie, la solution est filtrée, sa radioactivité est mesurée et est comparée à celle d'un témoin.

Les valeurs ainsi obtenues permettent de calculer le coefficient de distribution du césium $K_d$ $^{137}$Cs réprésentatif de l'affinité du produit par cet élément, il est défini par le rapport de la radioactivité fixée par gramme de produit à la radioactivité résiduelle en solution par cm³ de solution. Autrement dit le coefficient de distribution $K_d$ du césium s'établit selon la relation :

$$\frac{Radioactivité\ en\ césium\ 137\ ou\ 134\ piégé\ sur\ l'échangeur}{Radioactivité\ en\ césium\ 137\ ou\ 134\ restant\ en\ solution} \times \frac{Volume\ de\ solution\ traitée}{Masse\ d'échangeur\ utilisé}$$

Les résultats des essais effectués pendant des durées différentes (10 minutes et 1 jours) avec des solutions différentes (eau de refroidissement « OSI » à pH voisin de 7, et eau de lavage de résines « BF$_6$ » c'est-à-dire solution nitrique à 0,1 M) et avec différents produits à base d'hexacyanoferrates sont regroupés dans le tableau III ci-dessous:

TABLEAU III

| Coefficients de distribution Kd du césium sur divers produits à base d'hexacyanoferrates (par g de produit) | | | | |
|---|---|---|---|---|
| PRODUIT | eau de refroidissement OSI (pH≈7) | | eau de lavage de résines BF6 (HNO$_3$0, 1M) | |
| | 10 min | 1j | 10 min | 1j |
| Composite | 1900 | >100000 | 500 | >20000 |
| Massif labo | 4000 | 300000 | 19500 | 9200 |
| Massif Industriel 1 | 1100 | 3100 | 5000 | >50000 |
| Massif industriel 2 | 9000 | >100000 | >20000 | 7500* |
| Produit de départ Ex 1A | 280 | | 690 | |
| Int.Ex. 1A | 100 | | 4400 | |
| Final Ex. 1A | 90000 | 260000 | 3500 | 5800 |
| Int.Ex. 1B | 350 | 260 | 5800 | 7600 |
| Final Ex. 1B | 1200 | 42000 | 1400 | 9500 |
| * Présence de colloïdes | | | | |

Les résultats indiqués ci-dessus montrent que les facteurs de décontamination obtenus avec les matériaux de l'invention sont légèrement inférieurs à ceux des produits massifs. Mais les matériaux selon l'invention ont une excellente stabilité mécanique en colonne et les quantités d'hexacyanoferrates mises en oeuvre avec les matériau de l'invention sont nettement plus faibles que dans les autres cas et leur composition les rend facilement vitrifiables.

**Revendications**

1. Matériau solide composite fixant des polluants minéraux, à base d'hexacyanoferrate de métal, **caractérisé en ce qu'**il comprend un support solide minéral poreux revêtu d'une pellicule d'un polymère échangeur d'anions auquel est fixé un hexacyanoferrate de métal insoluble formant une couche mince.

2. Matériau selon la revendication 1, **caractérisé en ce que** la quantité d'hexacyanoferrate de métal fixé est de 1 à 10 % en poids par rapport à la masse du support solide.

3. Matériau selon la revendication 1, **caractérisé en ce que** le support est choisi parmi la silice, l'alumine, l'oxyde de titane, l'oxyde de zirconium, la terre de diatomées, les zéolithes, et les verres.

4. Matériau selon l'une quelconque des revendications précédentes **caractérisée en ce que** le support se présente sous forme de particules, de fibres, de membrane, de tube creux, ou d' étoffe tissée ou non tissée.

5. Matériau selon la revendication 4 **caractérisé en ce que** le support se présente sous forme de particules, et a une granulométrie de 1 à 500 $\mu$m.

6. Matériau selon l'une quelconque des revendications 4 à 5 **caractérisé en ce que** le support a une surface spécifique de 10 à 500 m$^2$/g.

7. Matériau selon l'une quelconque des revendications 4 à 6 **caractérisé en ce que** le support a une taille moyenne des pores de 100 à 1000 Å.

8. Matériau selon la revendication 1 **caractérisé en ce que** ledit polymère échangeur d'anions est issu d'un polymère organique, ledit polymère organique ayant été éventuellement pourvu de groupements cationiques.

9. Matériau selon la revendication 8 **caractérisé en ce que** ledit polymère organique est choisi parmi les polyvinylimidazoles, les copolymères du vinylimidazole avec au moins un autre monomère, et les polyéthyléneimines.

10. Matériau selon l'une quelconque des revendications 1 à 9 **caractérisé en ce que** ledit hexacyanoferrate de métal est choisi parmi les hexacyanoferrates de cuivre, de cobalt, de zinc, de cadmium, l'hexacyanoferrate de nickel, l'hexacyanoferrate de fer, et les hexacyanoferrates mixtes se rapportant à ces sels.

11. Procédé de préparation du matériau selon l'une quelconque des revendications 1 à 10 **caractérisé en ce qu'**il comprend les étapes suivantes :

   - Imprégnation d'un support solide minéral poreux avec une solution d'un polymère organique pour former une pellicule dudit polymère organique sur ledit support solide ;
   - Réticulation éventuelle dudit polymère avec un agent de réticulation ;
   - Création éventuelle de groupements cationiques sur ledit polymère organique éventuellement réticulé ;
   - Imprégnation du support solide ainsi revêtu d'une pellicule de polymère échangeur d'anions par une solution aqueuse d'hexacyanoferrate de métal alcalin ;
   - Lavage et éventuellement séchage dudit support solide revêtu d'une pellicule de polymère échangeur d'anions auquel est fixé un hexacyanoferrate de métal alcalin;
   - Addition d'une solution aqueuse d'un sel métallique au dit support solide revêtu pour former un matériau solide composite fixant des polluants minéraux comprenant le support solide revêtu d'une pellicule de polymère échangeur d'anions auquel est fixé un hexacyanoferrate de métal insoluble formant une couche mince;
   - Lavage et séchage.

12. Procédé selon la revendication 11 **caractérisé en ce que** la solution de polymère organique est une solution dans un solvant choisi parmi l'eau, les alcools et leurs mélanges.

13. Procédé selon la revendication 11 **caractérisé en ce que** l'agent de réticulation est choisi parmi l'épichlorhydrine, l'éther diglycidylique du 1,4-butane diol et les bis-époxydes.

14. Procédé selon la revendication 11 **caractérisé en ce que** le polymère comporte des atomes d'azote, et **en ce que** les groupements cationiques sont crées par quaternisation.

**15.** Procédé selon la revendication 11 **caractérisé en ce que** ledit hexacyanoferrate de métal alcalin est choisi parmi les hexacyanoferrates (II) et (III) de sodium ou de potassium.

**16.** Procédé selon la revendication 11 **caractérisé en ce que** ladite imprégnation par une solution aqueuse d'hexacyanoferrate de métal alcalin est réalisée à un pH contrôlé par un tampon.

**17.** Procédé selon la revendication 11 **caractérisé en ce que** ledit sel métallique est choisi parmi les sels de cuivre, cobalt, nickel, cadmium, zinc, fer.

**18.** Procédé selon la revendication 11 **caractérisé en ce que** l'anion dudit sel métallique est choisi parmi les nitrates, sulfates, chlorures, et acétates.

**19.** Procédé selon la revendication 11 **caractérisé en ce que** lesdites opérations de lavage sont réalisées dans un tampon.

**20.** Procédé de fixation d'au moins un polluant minéral issu d'un métal ou d'un isotope radioactif dudit métal contenu dans une solution, par mise en contact de ladite solution avec le matériau solide composite fixant des polluants minéraux selon l'une quelconque des revendications 1 à 10.

**21.** Procédé selon la revendication 20 **caractérisé en ce que** ladite solution est une solution aqueuse.

**22.** Procédé selon la revendication 20 **caractérisé en ce que** ladite solution est un liquide de procédé ou un effluent industriel.

**23.** Procédé selon la revendication 20 **caractérisé en ce que** ladite solution est choisie parmi les liquides et effluents issus de l'industrie et des installations nucléaires et des activités mettant en oeuvre des radionucléides.

**24.** Procédé selon la revendication 20 **caractérisé en ce que** le procédé est réalisé en continu.

**25.** Procédé selon la revendication 24 **caractérisé en ce que** le matériau solide composite fixant des polluants minéraux est conditionné en colonne.

**26.** Procédé selon l'une quelconque des revendications 20 à 25 **caractérisé en ce que** ledit polluant est présent à une concentration de 0,1 picogramme à 100 mg/l

**27.** Procédé selon la revendication 20 **caractérisé en ce que** ledit polluant est choisi parmi les complexes anioniques, les colloïdes et les cations.

**28.** Procédé selon l'une quelconque des revendications 20 à 27 **caractérisé en ce que** ledit polluant est un élément choisi parmi Cs, Co, Ag, Ru, Fe et Tl et les isotopes de ceux-ci

**Claims**

**1.** A composite solid material fixing mineral contaminants, with a metal hexacyanoferrate basis, **characterised in that** it comprises a solid support coated with a pellicle of an anion-exchange polymer to which is fixed an insoluble metal hexacyanoferrate forming a thin layer.

**2.** A material according to Claim 1, **characterised in that** the amount of fixed metal hexacyanoferrate is 1 to 10% by weight with respect to the mass of the solid support.

**3.** A material according to Claim 1, **characterised in that** the support is chosen from among silica, aluminium oxide, titanium oxide, zirconium oxide, diatomaceous earth, zeolites and glasses.

**4.** A material according to any one of the preceding claims, **characterised in that** the support comes in the form of particles, fibres, a membrane, a hollow tube, or woven or non-woven fabric.

**5.** A material according to Claim 4, **characterised in that** the support comes in the form of particles, and has a granulometry of 1 to 500 μm.

6. A material according to either one of Claims 4 or 5, **characterised in that** the support has a specific surface of 10 to 500 m²/g.

7. A material according to any one of Claims 4 to 6, **characterised in that** the support has a mean pore size of 100 to 1000 Å.

8. A material according to Claim 1, **characterised in that** the said anion-exchange polymer originates from an organic polymer, the said organic polymer having possibly been provided with cationic groupings.

9. A material according to claim 8, **characterized in that** the said organic polymer is chosen from among the polyvinylimidazoles, the copolymers of vinylimidazole with at least one other monomer, and the polyethyleneimines.

10. A material according to any one of claims 1 to 9, **characterized in that** the said metal hexacyanoferrate is chosen from among the hexacyanoferrates of copper, cobalt, zinc and cadmium, nickel hexacyanoferrate, iron hexacyanoferrate, and the mixed hexacyanoferrates relating to these salts.

11. A method of preparing the material according to any one of claims 1 to 10, **characterized in that** it comprises the following steps:

    - impregnation of a solid, porous, mineral support with a solution of an organic polymer, in order to form a pellicle of the said organic polymer on the said solid support;
    - possible cross-linking of the said polymer with a cross-linking agent;
    - possible creation of cationic groupings on the said possibly cross-linked organic polymer;
    - impregnation of the solid support thus coated with a pellicle of anion-exchange polymer with an aqueous solution of alkali metal hexacyanoferrate;
    - washing and possibly drying of the said solid support coated with a pellicle of anion-exchange polymer to which an alkali metal hexacyanoferrate is fixed;
    - addition of an aqueous solution of a metallic salt to the said coated solid support, in order to form a composite solid material fixing mineral contaminants, comprising the solid support coated with a pellicle of anion-exchange polymer to which is fixed an insoluble metal hexacyanoferrate forming a thin layer;
    - washing and drying.

12. A method according to claim 11, **characterized in that** the organic polymer solution is a solution in a solvent chosen from among water, the alcohols and mixtures thereof.

13. A method according to claim 11, **characterized in that** the cross-linking agent is chosen from among epichlorohydrin, 1,4-butanediol diglycidyl ether and the bis-epoxides.

14. A method according to claim 11, **characterized in that** the polymer has nitrogen atoms, and **in that** the cationic groupings are created by quaternization.

15. A method according to claim 11, **characterized in that** the said alkali metal hexacyanoferrate is chosen from among the hexacyanoferrates (II) and (III) of sodium or of potassium.

16. A method according to claim 11, **characterized in that** the said impregnation with an aqueous solution of alkali metal hexacyanoferrate is carried out at a pH controlled by a buffer.

17. A method according to claim 11, **characterized in that** the said metallic salt is chosen from among the salts of copper, cobalt, nickel, cadmium, zinc and iron.

18. A method according to claim 11, **characterized in that** the anion of the said metallic salt is chosen from among the nitrates, sulphates, chlorides and acetates.

19. A method according to claim 11, **characterized in that** the said washing operations are carried out in a buffer.

20. A method fixing at least one mineral contaminant contained in a solution, by bringing the said solution into contact with the composite solid material fixing mineral contaminants according to any one of claims 1 to 10.

**21.** A method according to claim 20, **characterized in that** the said solution is an aqueous solution.

**22.** A method according to claim 20, **characterized in that** the said solution is a process liquid or an industrial effluent.

**23.** A method according to claim 20, **characterized in that** the said solution is chosen from among the liquids and effluents originating from the nuclear industry and installations and activities using radionuclides.

**24.** A method according to claim 20, **characterized in that** the method is carried out continuously.

**25.** A method according to claim 24, **characterized in that** the composite solid material fixing mineral contaminants is packed in a column.

**26.** A method according to any one of claims 20 to 25, **characterized in that** the said contaminant is present at a concentration of 0.1 picograms to 100 mg/l.

**27.** A method according to claim 20, **characterized in that** the said contaminant is chosen from among the anionic complexes, the colloids and the cations.

**28.** A method according to any one of claims 20 to 27, **characterized in that** the said contaminant is an element chosen from among Cs, Co, Ag, Ru, Fe and Tl and the isotopes thereof.

**Patentansprüche**

**1.** Festes Verbundmaterial zum Fixieren von mineralischen Schadstoffen (Verunreinigungen) auf Basis eines Metallhexacyanoferrats, **dadurch gekennzeichnet, dass** es umfasst einen porösen mineralischen festen Träger, der mit einem Anionenaustauscher-Polymer-Film bedeckt ist, an dem ein unlösliches Metallhexacyanoferrat in Form einer dünnen Schicht fixiert ist.

**2.** Material nach Anspruch 1, **dadurch gekennzeichnet, dass** die fixierte Metallhexacyanoferrat-Menge 1 bis 10 Gew.-%, bezogen auf die Masse des festen Trägers, beträgt.

**3.** Material nach Anspruch 1, **dadurch gekennzeichnet, dass** der Träger ausgewählt ist aus der Gruppe Siliciumdioxid, Aluminiumoxid, Titanoxid, Zirkoniumoxid, der Diatomeenerden, der Zeolithe und der Gläser.

**4.** Material nach einem der vorhergehenden Ansprüche, **dadurch gekennzeichnet, dass** der Träger in Form von Teilchen, Fasern, einer Membran, eines hohlen Rohrs oder eines gewebten Gewebes (Stoffes) oder nicht-gewebten Gewebes (Vliesstoffes) vorliegt.

**5.** Material nach Anspruch 4, **dadurch gekennzeichnet, dass** der Träger in Form von Teilchen vorliegt und eine Teilchengröße von 1 bis 500 $\mu$m aufweist.

**6.** Material nach einem der Ansprüche 4 bis 5, **dadurch gekennzeichnet, dass** der Träger eine spezifische Oberflächengröße von 10 bis 500 $m^2$/g aufweist.

**7.** Material nach einem der Ansprüche 4 bis 6, **dadurch gekennzeichnet, dass** der Träger eine mittlere Porengröße von 100 bis 1000 Å (10 - 100 nm) aufweist.

**8.** Material nach Anspruch 1, **dadurch gekennzeichnet, dass** das genannten Anionenaustauscherharz abgeleitet ist von einem organischen Polymer, das gegebenenfalls mit kationischen Gruppen versehen ist.

**9.** Material nach Anspruch 8, **dadurch gekennzeichnet, dass** das genannte organische Polymer ausgewählt ist aus der Gruppe der Polyvinylimidazole, der Copolymeren von Vinylimidazol mit mindestens einem anderen Monomer und der Polyethylenimine.

**10.** Material nach einem der Ansprüche 1 bis 9, **dadurch gekennzeichnet, dass** das genannte Metallhexacyanoferrat ausgewählt ist aus der Gruppe der Hexacyanoferrate von Kupfer, Kobalt, Zink, Cadmium, Nickelhexacyanoferrat, Eisenhexacyanoferrat und der gemischten Hexacyanoferrate der oben genannten Salze.

11. Verfahren zur Herstellung eines Materials nach einem der Ansprüche 1 bis 10, **dadurch gekennzeichnet, dass** es die folgenden Stufen umfasst:

- Imprägnieren eines porösen mineralischen festen Trägers mit einer Lösung eines organischen Polymers zur Bildung eines dünnen Films des organischen Polymers auf dem genannten festen Träger;
- gegebenenfalls Vernetzung des genannten Polymers mit einem Vernetzungsmittel;
- gegebenenfalls Erzeugung von kationischen Gruppen an dem genannten, gegebenenfalls vernetzten organischen Polymer;
- Imprägnieren des festen Trägers, der mit einem Film aus einem Anionenaustauscher-Polymer bedeckt ist, mit einer wässrigen Alkalimetallhexacyanoferrat-Lösung;
- Waschen und gegebenenfalls Trocknen des genannten festen Trägers, der mit einem Film aus einem Anionenaustauscher-Polymer bedeckt ist, an dem ein Alkalimetallhexacyanoferrat fixiert ist;
- Zugabe einer wässrigen Lösung eines Metallsalzes zu dem genannten beschichteten festen Träger zur Bildung eines festen Verbundmaterials zum Fixieren von mineralischen Schadstoffen (Verunreinigungen), das umfasst einen festen Träger, der mit einem Film aus einem Anionenaustauscher-Polymer bedeckt ist, an dem ein unlösliches Metallhexacyanoferrat fixiert ist zur Bildung einer dünnen Schicht; und
- Waschen und Trocknen.

12. Verfahren nach Anspruch 11, **dadurch gekennzeichnet, dass** die Lösung des organischen Polymers eine Lösung in einem Lösungsmittel, ausgewählt aus der Gruppe Wasser, der Alkohole und ihrer Mischungen, ist.

13. Vorfahren nach Anspruch 11, **dadurch gekennzeichnet, dass** das Vernetzungsmittel ausgewählt wird aus der Gruppe Epichlorhydrin, Diglycidylether von 1,4-Butandiol und der Bisepoxide.

14. Verfahren nach Anspruch 11, **dadurch gekennzeichnet, dass** das Polymer Stickstoffatome umfasst und dass die kationischen Gruppen durch Quatornisierung gebildet worden sind.

15. Verfahren nach Anspruch 11, **dadurch gekennzeichnet, dass** das genannte Alkalimetallhexacyanoferrat ausgewählt wird aus der Gruppe der Hexacyanoferrate (II) und -(III) von Natrium oder Kalium.

16. Verfahren nach Anspruch 11, **dadurch gekennzeichnet, dass** die genannte Imprägnierung mit einer wässrigen Lösung eines Alkalimetallhexacyanoferrats bei einem mit einem Puffer kontrollierten (gesteuerten) pH-Wert durchgeführt wird.

17. Vorfahren nach Anspruch 11, **dadurch gekennzeichnet, dass** das genannte Metallsalz ausgewählt wird aus der Gruppe der Salze von Kupfer, Kobalt, Nickel, Cadmium, Zink und Eisen.

18. Verfahren nach Anspruch 11, **dadurch gekennzeichnet, dass** das Anion des genannten Metalls ausgewählt wird aus der Gruppe der Nitrate, Sulfate, Chloride und Acetate.

19. Verfahren nach Anspruch 11, **dadurch gekennzeichnet, dass** die genannten Wascharbeitsgänge in einem Puffer durchgeführt werden.

20. Verfahren zum Fixieren mindestens eines mineralischen Schadstoffes (Verunreinigung), der (die) stammt aus einem Metall oder einem radioaktiven Isotop des genannten Metalls, das in einer Lösung enthalten ist, bei dem man die genannte Lösung mit dem festen Verbundmaterial zum Fixieren von mineralischen Schadstoffen (Verunreinigungen) nach einem der Ansprüche 1 bis 10 in Kontakt bringt.

21. Verfahren nach Anspruch 20, **dadurch gekennzeichnet, dass** es sich bei der genannten Lösung um eine wässrige Lösung handelt.

22. Verfahren nach Anspruch 20, **dadurch gekennzeichnet, dass** die genannte Lösung eine Verfahrensflüssigkeit oder ein industrieller Abstrom ist.

23. Verfahren nach Anspruch 20, **dadurch gekennzeichnet, dass** die genannte Lösung ausgewählt wird aus der Gruppe der Flüssigkeiten und Abströme, die aus der Industrie, aus nuclearen Anlagen und Aktivitäten stammen, bei denen Radionucleide eingesetzt werden.

24. Verfahren nach Anspruch 20, **dadurch gekennzeichnet, dass** das Verfahren kontinuierlich durchgeführt wird.

25. Verfahren nach Anspruch 24, **dadurch gekennzeichnet, dass** das feste Verbundmaterial zum Fixieren von mineralischen Schadstoffen (Verunreinigungen) in einer Kolonne konditioniert wird.

26. Verfahren nach einem der Ansprüche 20 bis 25, **dadurch gekennzeichnet, dass** der genannte Schadstoff (Verunreinigung) in einer Konzentration von 0,1 pg bis 100 mg/l vorliegt.

27. Verfahren nach Anspruch 20, **dadurch gekennzeichnet, dass** der genannte Schadstoff (Verunreinigung) ausgewählt wird unter den Anionenkomplexen, Kolloiden und Kationen.

28. Verfahren nach einem der Ansprüche 20 bis 27, **dadurch gekennzeichnet, dass** der genannte Schadstoff (Verunreinigung) ein Element, ausgewählt aus der Gruppe Cs, Co, Ag, Ru, Fe und TI und den Isotopten derselben, ist.